# EUROPEAN PATENT SPECIFICATION

(11) **EP 0 828 072 B1**
(45) Date of publication and mention of the grant of the patent: **16.01.2002**
(21) Application number: 97115363.0
(22) Date of filing: 04.09.1997
(51) Int. Cl.: F02F 11/00, F16J 15/32

(54) **Sheet metal cover for a mechanical, rotary seal for a drive shaft of a vehicle**
Deckel aus Stahlblech für eine rotierende Abdichtung für eine Antriebswelle eines Kraftfahrzeuges
Couvercle métallique en tôle pour un dispositif d'étanchéité rotatif pour un arbre d'entraînement d'un véhicule

(30) Priority: 06.09.1996 IT TO960735
(43) Date of publication of application: 11.03.1998
(73) Proprietor: RFT S.p.A., 10121 Torino (IT)
(72) Inventor: Chiovato, Piero, 10025 Pino Torinese (IT)
(74) Representative: Jorio, Paolo

(56) References cited:
- DE-A- 3 631 053
- DE-C- 4 224 995
- DE-C- 4 408 408
- DE-U- 9 213 374
- DE-U- 29 603 159

## Description

The present invention relates to a sealed sheet metal cover for receiving a movable mechanical member passing through it, typically a rotatable shaft, operable to seal hermetically a support (for example the crank case or the gearbox casing of a vehicle) from which the mechanical member protrudes, thereby preventing any escape of fluids which might be present in the support, such as lubricants for example.

Numerous covers of the said type are known in the prior art, having been developed, above all, to reduce the weight and the cost of covers of a previous design made of die cast metal. Products of this type must ensure both a static seal at the fixed connection with the housing they close and a dynamic seal between the parts in relative motion.

The two seals can naturally both be made of the same material, typically an elastomer, but it is evident that, since the dynamic seal is subjected to friction, it would be advisable to use a material with a low coefficient of friction, so as to reduce the generation of heat in use: on the other hand, this requirement, which generally involves relatively expensive materials, is superfluous for the static seal, for which a more economical material is better suited.

The prior art provides dynamic seals made of polytetrafluoroethylene (referred to hereafter as PTFE) for example, such as those described in U.S. Patent 3984113 or in European Patent 0122319. The main disadvantage resulting from the use of PTFE, apart from the high cost involved, consists in the low adhesion which can be achieved between a surface of this material and a metal surface, compared to that obtainable with the rubber traditionally used for seals. A seal made of PTFE is thus generally compressed against the surface of a reinforcing support of the seal itself by means of a special stop element, as shown for example in the aforesaid U.S. patent; in this case, however, the PTFE-metal coupling does not in itself ensure a highly effective seal against possible seepage.

In the aforesaid European patent, on the other hand, an elastomeric seal is fitted between the PTFE seal and the metal reinforcement, with one surface co-vulcanized to the metal surface of the support and the other to a portion of the PTFE seal, ensuring that this latter is securely fixed to the metal surface by means of the elastomer vulcanized thereto.

It should be noted that both here and hereinafter the term "co-vulcanized" is used to described the adhesion of an elastomeric material to another material, for example a metal or another polymer upon vulcanization, in accordance with a procedure well known in the art.

The use of a specially shaped rubber insert is also known from the said European patent, it being shaped to form a second lip, in addition to the PTFE lip and positioned outwardly thereof, thereby contributing to the dynamic seal, especially for protecting from any external agents and thus commonly known as a dust guard.

When seeking to apply the arrangements described for rubber-PTFE seals to the case of sealed covers, it is clear that it would be more economical to make both the static seal, and a possible dust guard lip for the dynamic seal, of an elastomeric material, perhaps of the same material and certainly in a single moulding operation, saving the PTFE only for the sliding lip.

However, since the static seal and the dust guard are on opposite sides, they either have to be made in two separate operations, as in the prior art, or, in an arrangement which would be obvious to any specialist in this field, they would have to be fixed separately on the inside of the cover: the disadvantage of this would be that the metal insert provided to reinforce the PTFE seal would be embedded in a seat at least partly covered in elastomeric material; compared to conventional fixing, directly against the metal surface of the cover, the arrangement as described would have the disadvantage of not ensuring the correct fixing and relative positioning of the metal insert for reinforcing the PTFE part, owing to possible deformations of the elastomer present in the insert housing.

The object of the present invention is to provide a sealed cover able to overcome the disadvantages of the prior art arrangements described and which, in particular, is highly effective, simple to manufacture and of reasonable cost.

This object is achieved according to the present invention by providing a sealed cover for receiving a mechanical member which passes through it and is movable with respect thereto, including a base wall with an aperture for the passage of the said movable mechanical member, a peripheral attachment flange, a static seal assembly carried on a first face of the said cover in correspondence with the said flange, a dynamic seal assembly carried on an inner rim of the said aperture for sealing cooperation with the said member; the said dynamic seal assembly including a first sealing lip extending at least partially axially on the side of the second face of the said cover, opposite the first face, and a second sealing lip made of a material with a low coefficient of friction; characterised in that the said static seal assembly and the said first lip of the dynamic seal assembly are integrally connected to each other by at least one strip of elastomeric material which extends between the two surfaces through at least one hole passing through the cover.

The cover according to the invention thus provides a highly effective seal, even against seepage in the area of the PTFE portion of the seal assembly, in addition to all the advantages deriving from the use of a low-friction material such as PTFE, exclusively for the sliding portion of the dynamic seal assembly; in fact, while the PTFE element is securely fixed in position by a metal insert fitted to a metal seat in the cover, a rubber seal arranged in use between the PTFE seal and the metal surface of the cover can also be moulded together with the static seal and any dust guard lip provided; the cover being extremely simple and, therefore, inexpensive to produce.

The invention will now be further described with reference to the figures of the appended drawing, which illustrate an embodiment provided as a non-limitative example, in which:
Figure 1 is a front elevation of a sealed cover according to the invention, seen from the side facing a support to be closed, in use, by the cover;
Figure 2 is a cross section of the cover, taken on the line II-II of Figure 1; and
Figure 3 is a detail, on an enlarged scale, of the sectional view of Figure 2.

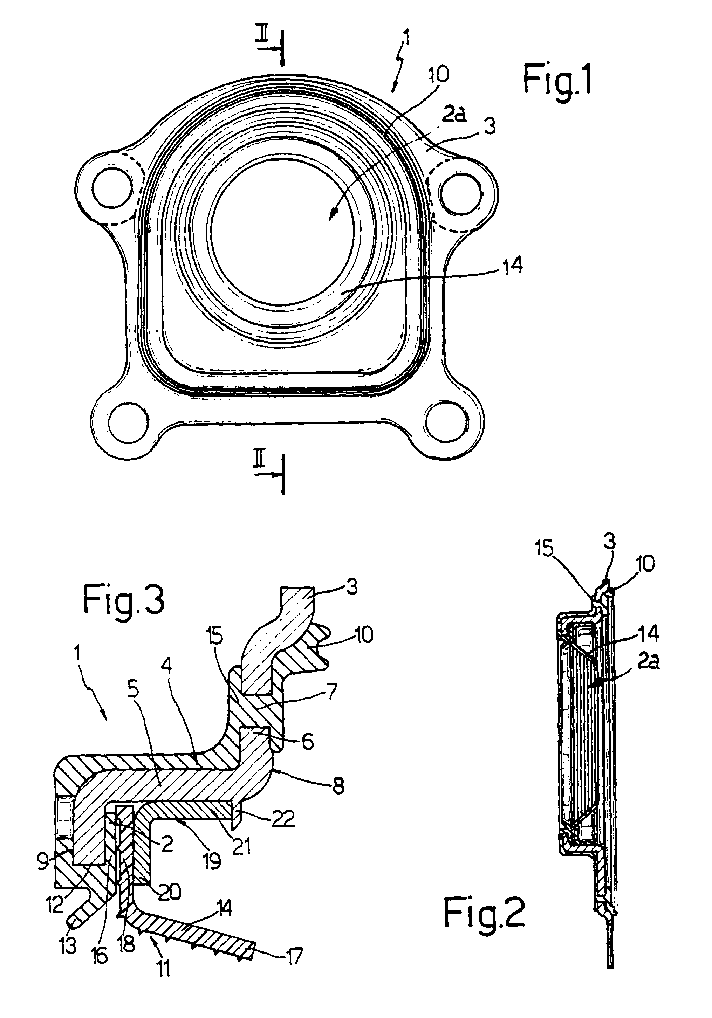

With reference to Figures 1 to 3, a sealed cover generally indicated 1 is provided to close a support or housing for a movable (rotatable and/or translatable) mechanical member, for example the crank case or the gearbox casing of a vehicle from which protrudes the drive shaft, not shown for the sake of simplicity.

The cover 1 is substantially cup shape and has a base wall 2 with an aperture 2a for the shaft to pass through, a peripheral attachment flange 3 for fixing the cover, in known manner, to the housing it is to close, and an intermediate portion 4 connecting the flange 3 and the base wall 2; the portion 4 in turn comprises a sleeve portion 5 and a flange portion 6 having a series of through holes 7: an inner surface or face 8 is thus defined, facing the housing that the cover is to close, and an outer surface or face 9 opposite the first.

The cover 1 also includes a first seal assembly 10 for forming a static frontal seal against the said support, arranged on the inner surface 8 in correspondence with the flange 3, and a second seal assembly 11 for forming a dynamic, sliding seal on the said shaft, arranged on an inner border 12 of the aperture formed in the base wall 2.

The static seal assembly is constituted by an annular element of elastomeric material of a known type.

The dynamic seal assembly 11 comprises a first sealing lip 13, also of a known elastomeric material, extending axially towards the outer surface 9 and having as its main function protection against any external agents, and a second sealing lip 14 made of a material with a low coefficient of friction, preferably polytetrafluoroethylene (PTFE) or another fluorinated polymer deriving therefrom. The lip 13 is integrally connected to the static seal assembly 10 by at least one connection element 15 (for example an elastomeric strip) partially covering the outer surface 9 and rejoining the assembly 19 on the inner surface 8 by passing through the holes 7. In effect, the first dynamic sealing lip 13, the static seal assembly 10 and the connection element 15 constitute a single element formed from the same elastomeric material.

The first dynamic sealing lip 13 includes an annular base portion 16 co-vulcanized onto the inner surface of the base wall 2 and extending alongside the lip 14, interposed between this latter and the metal base wall 2 of the cover.

The second sealing lip 14 is shaped so as to comprise, in addition to a portion 17 constituting the lip proper, operable to cooperate sealingly with the mechanical member when in motion, a bearing portion 18 which bears on and engages the annular portion 16 of the first lip 13: in order to enhance adhesion and the fluid-tight seal between these two portions, the front surface of the portion 16 can be formed with a series of annular projections, not illustrated for the sake of simplicity. The portion 18 is thus wedged between the rubber ring 16 and a radially inward flange portion 20 of a metal insert 19, which also includes a sleeve portion 21 which is an interference fit on the corresponding sleeve portion 5 of the cover; the metal insert 19 is also locked axially, on the opposite side from the dynamic seal assembly 11, by portions 22 of the cover which have been bent back for this purpose, by bevelling.

It is both extremely simple, and inexpensive, to produce the static seal assembly 10, the first dynamic sealing lip 13 and the element 15 connecting them in one step by moulding them together of the same material. The PTFE seal 14, manufactured separately, is then assembled along with the metal insert 19.

In use, a dynamic seal is essentially ensured by the PTFE lip, which slidingly cooperates with the rotating shaft, but the presence of the base portion 16 of the rubber lip ensures there is no risk of oil leakage, as happens in similar prior art arrangements, in which PTFE is coupled directly to metal. In addition, the PTFE seal is securely held against the rubber portion 16, to which it can in fact be glued, by the metal insert 19 since, as this latter is fixed directly to the structure of the cover, in a metal-metal coupling, it is securely held and correctly positioned; there is therefore no risk of the sealing rim 14 becoming accidentally detached.

It is clear, finally, that modifications and variations may be made to the cover as described without thereby departing from the scope of the invention as defined the claims.

## Claims

1. A sheet metal sealed cover for receiving a mechanical member passing through it and movable with respect thereto, including a base wall (2) with an aperture (2a) for the passage of the said movable mechanical member, a peripheral attachment flange (3), a static seal assembly (10) positioned to correspond with the said flange (3) on a first surface (8) of the said cover (1), a dynamic seal assembly (11) positioned on an inner rim (12) of the said aperture (2a) for fluid-tight cooperation with the said member; the said dynamic seal assembly (11) including a first sealing lip (13) extending at least partly in an axial direction on the side of a second surface (9) of the said cover (1), opposite the first surface, and a second sealing lip (14) made of a material with a low coefficient of friction; **characterised in that** the said static seal assembly (10) and the said first lip (13) of the dynamic seal assembly (11) are integrally connected by at least one strip (15) of elastomeric material extending between the said two surfaces (8, 9) through at least one hole (7) passing through the cover (1).

2. A cover according to Claim 1, **characterised in that** the said second sealing lip (14) is shaped so as to comprise a base portion (18) which abuts the said base wall (2) of the cover (1) and a portion (17) sealingly cooperating with the said movable mechanical member.

3. A cover according to Claim 2, **characterised in that** the said second sealing lip (14) is made of polytetrafluoroethylene (PTFE).

4. A cover according to either Claim 2 or Claim 3, **characterised in that** the said first sealing lip (13) includes an annular base portion interposed between the said base wall (2) of the cover (1) and the said base portion (18) of the second sealing lip (14), the said annular base portion (16) being co-vulcanized onto the base wall (2) and having a front surface in contact with the said base portion (18), the annular base portion (16) preferably having a plurality of annular projections able to cooperate with the base portion (18) in order to enhance the adhesion and the seal between the said two portions (16, 18).

5. A cover according to Claim 4, **characterised in that** it includes an intermediate connection portion (4) between the said base wall (2) and the said flange (3), the said connection portion (4) in turn comprising a sleeve portion (5) and a flange portion (6).

6. A cover according to Claim 5, **characterised in that** the said base portion (18) of the second sealing lip (14) is pressed against the said annular portion (16) by a metal insert (19) which compresses it between the said annular portion (16) and the said metal insert (19).

7. A cover according to Claim 6, **characterised in that** the said metal insert (19) is a ring having a sleeve portion (21) embedded in the said sleeve portion (5) of the connection portion (4) of the cover (1) and a radially inward flange portion (20) adhering to the said base portion (18) of the second sealing lip (14).

8. A cover according to Claim 7, **characterised in that** the said metal insert (19) is interference coupled to the said sleeve portion (5) of the connection portion (4) of the cover (1) and clamped axially on the opposite side from the said second sealing lip (14) by bent up portions (22) of the cover (1).

## Patentansprüche

1. Abgedichtete Blechabdeckung zur Aufnahme eines dadurch verlaufenden und im Verhältnis dazu bewegbaren mechanischen Elements, die eine Basiswand (2) mit einer Öffnung (2a) zur Durchführung des bewegbaren mechanischen Elements, einen Ümfangsanbauflansch (3), eine in Übereinstimmung mit dem Flansch (3) an einer ersten Stirnfläche (8) der Abdeckung (1) positionierte statische Dichtungseinheit (10) sowie eine an einem Innenrand (12) der Öffnung (2a) zwecks fluiddichtem Zusammenwirken mit dem Element positionierte dynamische Dichtungseinheit (11) enthält, wobei die dynamische Dichtungseinheit (11) eine erste Dichtungslippe (13), die sich mindestens teilweise in einer axialen Richtung auf der Seite einer zweiten Stirnfläche (9) der Abdeckung (1) gegenüber der ersten Stirnfläche erstreckt, und eine zweite Dichtungslippe (14) aus einem Material mit einer niedrigen Reibungszahl enthält, **dadurch gekennzeichnet, daß** die statische Dichtungseinheit (10) und die erste Lippe (13) der dynamischen Dichtungseinheit (11) durch mindestens einen Streifen (15) aus elastomerem Material, der sich zwischen den beiden Stirnflächen (8, 9) durch mindestens ein durch die Abdeckung (1) verlaufendes Loch (7) erstreckt, integral miteinander verbunden sind.

2. Abdeckung nach Anspruch 1, **dadurch gekennzeichnet, daß** die zweite Dichtungslippe (14) so geformt ist, daß sie einen stumpf an die Basiswand (2) der Abdeckung (1) angrenzenden Basisabschnitt (18) und einen in abdichtender Weise mit dem bewegbaren mechanischen Element zusammenwirkenden Abschnitt (17) umfaßt.

3. Abdeckung nach Anspruch 2, **dadurch gekennzeichnet, daß** die zweite Dichtungslippe (14) aus Polytetrafluorethylen (PTFE) besteht.

4. Abdeckung nach Anspruch 2 oder Anspruch 3, **dadurch gekennzeichnet, daß** die erste Dichtungslippe (13) einen ringförmigen Basisabschnitt enthält, der zwischen der Basiswand (2) der Abdeckung (1) und dem Basisabschnitt (18) der zweiten Dichtungslippe (14) angeordnet ist, wobei der ringförmige Basisabschnitt (16) mit der Basiswand (2) durch Kovulkanisieren verbunden ist und eine mit dem Basisabschnitt (18) in Kontakt stehende Frontfläche besitzt, wobei der ringförmige Basisabschnitt (16) vorzugsweise mehrere ringförmige Vorsprünge aufweist, die mit dem Basisabschnitt (18) zusammenwirken können, um die Haftung und die Abdichtung zwischen den beiden Abschnitten (16, 18) zu verstärken,

5. Abdeckung nach Anspruch 4, **dadurch gekennzeichnet, daß** sie einen Zwischenverbindungsabschnitt (4) zwischen der Basiswand (2) und dem Flansch (3) enthält, wobei der Verbindungsabschnitt (4) wiederum einen Hülsenabschnitt (5) und einen Flanschabschnitt (6) umfaßt.

6. Abdeckung nach Anspruch 5, **dadurch gekennzeichnet, daß** der Basisabschnitt (18) der zweiten Dichtungslippe (14) durch eine Metalleinlage (19), die ihn zwischen dem ringförmigen Abschnitt (16) und der Metalleinlage (19) zusammendrückt, gegen den ringförmigen Abschnitt (16) gedrückt wird.

7. Abdeckung nach Anspruch 6, **dadurch gekennzeichnet, daß** die Metalleinlage (19) ein Ring ist, der einen in den Hülsenabschnitt (5) des Verbindungsabschnitts (4) der Abdeckung (1) eingebetteten Hülsenabschnitt (21) und einen sich radial nach innen erstreckenden Flanschabschnitt (20) aufweist, der am Basisabschnitt (18) der zweiten Dichtungslippe (14) anhaftet.

8. Abdeckung nach Anspruch 7, **dadurch gekennzeichnet, daß** die Metalleinlage (19) im Preßsitz mit dem Hülsenabschnitt (5) des Verbindungsabschnitts (4) der Abdeckung (1) gekoppelt ist und axial auf der der zweiten Dichtungslippe (14) gegenüberliegenden Seite durch hochgebogene Abschnitte (22) der Abdeckung (1) verklammert ist.

## Revendications

1. Un couvercle hermétique, en tôle métallique, en mesure de recevoir un élément mécanique passant à travers et mobile par rapport au couvercle, comprenant une paroi de base (2) avec une ouverture (2a) pour le passage dudit élément mécanique mobile, une bride (3) de fixation périphérique, un assemblage (10) de joint statique positionné pour correspondre avec ladite bride (3) sur une première surface (8) dudit couvercle (1), un assemblage (11) de joint dynamique positionné sur un bord (12) interne de ladite ouverture (2a) pour une coopération hermétique aux fluides avec ledit élément ; ledit assemblage (11) de joint dynamique comprenant une première lèvre (13) de joint s'étendant au moins partiellement dans une direction axiale sur le côté d'une deuxième surface (9) dudit couvercle (1), à l'opposé de la première surface, et une deuxième lèvre (14) de joint faite en un matériau avec un faible coefficient de friction ; **caractérisé en ce que** ledit assemblage (10) de joint statique et ladite première lèvre (13) de l'assemblage de joint dynamique (11) sont intégralement reliés par au moins une bande (15) de matériau élastomère s'étendant entre lesdites deux surfaces (8, 9) à travers au moins un trou (7) s'étendant à travers le couvercle (1).

2. Un couvercle selon la revendication 1, **caractérisé en ce que** ladite deuxième lèvre (14) de joint est formée de sorte à comprendre une partie (18) de base qui vient en butée contre ladite paroi de base (2) du couvercle (1) et une partie (17) cn coopération hermétique avec ledit élément mécanique mobile.

3. Un couvercle selon la revendication 2, **caractérisé en ce que** ladite deuxième lèvre (14) de joint est faite en polytétrafluoroéthylène (PTFE).

4. Un couvercle selon l'une des revendications 2 ou 3, **caractérisé en ce que** ladite première lèvre (13) de joint comprend une partie de base annulaire interposée entre ladite paroi de base (2) du couvercle (1) et ladite partie de base (18) de la deuxième lèvre (14) de joint, ladite partie de base annulaire (16) étant covulcanisée sur la paroi (2) de base et ayant une surface frontale en contact avec ladite partie (18) de base, la partie (16) de base annulaire ayant de préférence une pluralité de projections annulaires capables de coopérer avec la partie (18) de base, de sorte à augmenter l'adhésion et l'étanchéité entre lesdites deux parties (16, 18).

5. Un couvercle selon la revendication 4, **caractérisé en ce qu'**il comprend une partie de liaison (4) intermédiaire entre ladite paroi de base (2) et ladite bride (3), ladite partie de liaison (4) comprenant à son tour une partie (5) de manchon et une partie (6) de bride.

6. Un couvercle selon la revendication 5, **caractérisé en ce que** ladite partie (18) de base de la deuxième lèvre (14) de joint est pressée contre la partie (16) annulaire au moyen d'un insert (19) en métal qui la comprime entre ladite partie (16) annulaire et ledit inscrt en métal (19).

7. Un couvercle selon la revendication 6, **caractérisé en ce que** ledit insert (19) en métal est un anneau ayant une partie (21) de manchon encastrée dans ladite partie (5) de manchon de la partie (4) de liaison du couvercle (1) et une partie (20) de bride s'étendant radialement vers l'intérieur en adhésion à ladite partie de base (18) de la deuxième lèvre (15) de joint.

8. Un couvercle selon la revendication 7, **caractérisé en ce que** l'insert en métal (19) est couplé de manière ajustée à ladite partie (5) de manchon de ladite partie (4) de liaison du couvercle (1) et serrée axialement sur le côté opposé à ladite seconde lèvre (14) de joint par des parties (22) coudées du couvercle (1).
